# FASCICULE DE BREVET EUROPEEN

(11) **EP 2 382 242 B1**
(45) Date de publication et mention de la délivrance du brevet: **10.10.2012**
(21) Numéro de dépôt: 09796732.7
(22) Date de dépôt: 22.12.2009
(51) Int. Cl.: C08C 19/44, C08F 12/04, C08F 36/04, C08F 4/48

(54) **NOUVEAU SYSTÈME D'AMORÇAGE POUR POLYMÉRISATION ANIONIQUE DE DIÈNES CONJUGUÉS, PROCÉDÉ DE PRÉPARATION D'ÉLASTOMÈRES DIÉNIQUES**
NEUES INITIIERUNGSSYSTEM FÜR DIE ANIONISCHE POLYMERISATION VON KONJUGIERTEN DIENEN UND VERFAHREN ZUR HERSTELLUNG VON DIENELASTOMEREN
NOVEL INITIATION SYSTEM FOR THE ANIONIC POLYMERISATION OF CONJUGATED DIENES, AND METHOD FOR PREPARING DIENE ELASTOMERS

(30) Priorité: 23.12.2008 FR 0858988
(43) Date de publication de la demande: 02.11.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: MARECHAL, Jean-Marc, F-63400 Chamalieres (FR)
(74) Mandataire: Le Cam, Véronique Marie Christine
(86) Numéro de dépôt international: PCT/EP2009/067747
(87) Numéro de publication internationale: WO 2010/072761

(56) Documents cités:
- EP-A1- 0 890 588
- US-A- 5 463 003
- US-A- 5 463 004

## Description

La présente invention est relative à un nouveau système d'amorçage pour la préparation d'un élastomère diénique vivant fonctionnalisé en extrémité de chaîne par un groupe amine par polymérisation anionique. L'invention concerne également des procédés de préparation d'élastomères modifiés comportant en extrémité de chaîne un groupe amine. Ces élastomères modifiés s'avèrent particulièrement intéressants en composition de caoutchouc renforcée pour pneumatiques car ils confèrent des propriétés dynamiques et mécaniques améliorées à l'état vulcanisé.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

La réduction de l'hystérèse des mélanges est un objectif permanent qui doit toutefois se faire en conservant l'aptitude à la mise en oeuvre des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante. Les élastomères modifiés portant une fonction amine en extrémité de chaîne ont la particularité de conduire, grâce à l'interaction de la fonction amine avec la charge, à une réduction de l'hystérèse du mélange.

L'utilisation d'élastomères à fonction amine en extrémité de chaîne entraîne néanmoins une augmentation importante de la viscosité à cru en mélange ce qui conduit à une mise en oeuvre altérée. Il s'avère que l'utilisation d'un élastomère modifié par une fonction amine en extrémité de chaîne et présentant une autre fonctionnalité, à savoir un couplage à l'étain conduit à un bon compromis de propriétés mécaniques et dynamiques.

La synthèse de ce type d'élastomère à double fonctionnalité requiert dans un premier temps la formation d'une chaîne polymère vivante possédant une fonction amine en extrémité de chaîne. Cette fonction est généralement introduite par un amorçage réalisé à l'aide d'une espèce fonctionnelle aminée.

La synthèse d'élastomères initiée par des amorceurs aminés est décrite depuis de nombreuses années selon différents processus de synthèse.

L'initiation à l'aide de composés possédant une fonction amine-lithium appelés NLi ou N-Met (avec Met désignant un métal alcalin), non solubles dans un solvant aliphatique hydrocarboné, est décrite dans US 2,849,432, US 3,935,177, JP 59038209, EP 0 451 603. Les amorceurs décrits sont de type comprenant une dialkylamine R₁R₂N ou une cycloalkylamine R₃N (R₁ et R₂ groupes alkyles et R₃ groupe alkylène dont la chaîne principale contient un nombre d'atomes de carbone inférieur ou égal à 6). Ils sont connus pour ne pas être solubles dans des solvants aliphatiques hydrocarbonés. L'espèce NLi est formée dans un premier temps par la réaction d'un alkyllithien sur l'amine secondaire.

L'initiation à l'aide des espèces NLi, décrites dans le paragraphe précédent, est réalisée par une mise en solution des espèces NLi dans les solvants aliphatiques dans les documents EP 0 590 490, EP 0 593 049, EP 0 622 381, EP 0 626 278 et EP 0 718 321. Deux voies ont été développées pour solubiliser les espèces NLi, décrites « seules » non solubles en solvant aliphatique:
- par l'addition d'un agent polaire (à des rapports bien déterminés) pour former une espèce NLi.(Agt polaire)ₓ
- par l'addition de monomère afin de former un prépolymère, on obtient alors une espèce N(monomère)ₓLi qui peut permettre la (co)polymérisation du butadiène et du styrène. L'initiation par des RNLi, avec R groupement alkyl cycliques dont la chaîne principale contient plus de 6 atomes de carbone, solubles dans les solvants aliphatiques est décrite dans EP0 590 491, EP 0 600 208, EP 0 709 408 ou EP 0 741 148. A partir d'une certaine taille (nombre de carbone de la chaîne principale supérieur ou égal à 7) les amidures cycliques de lithium sont solubles dans les solvants aliphatiques. L'espèce NLi est formée par la réaction d'un alkyllithien sur une amine secondaire (RNH).

L'initiation par une espèce générée par la réaction d'un diamidure d'étain (II) avec un alkyllithien (ou un amidure de lithium) est décrite dans US 5,463,003et US 5,463,004. Le diamidure d'étain est synthétisé par la réaction d'un amidure de lithium sur du SnCl₂ en présence d'un agent polaire. La polymérisation est ensuite initiée de deux manières soit par le produit d'addition d'un alkyllithien et de ce diamidure d'étain soit directement par le complexe formé de ce diamidure d'étain et d'un amidure de lithium. Les auteurs indiquent que la polymérisation a lieu par insertion des unités monomères entre la liaison amine-étain ou carbone-étain. En cours de polymérisation l'élastomère est de type (R₂N-SBR-)₂Sn-(R'-SBR)-Li. Il contient à la fois des fonctions amines et étain. Selon ces auteurs, l'addition du diamidure d'étain sur une chaîne polymère vivante ne conduit pas à la désactiver.

L'initiation par un complexe magnésien utilisé comme agent de transfert est décrite dans EP 0 747 405. Ce brevet revendique l'utilisation d'un composé de type (RN)ₓMgR'₃₋ₓLi avec R désignant un alkyle cyclique et R' un groupe alkyle. Les auteurs indiquent que la polymérisation a lieu par insertion des unités monomères entre la liaison amine-magnésium ou carbone-magnésium. En cours de polymérisation, l'élastomère, un SBR par exemple, initié par (RN)₂MgR'Li, est de type (RN-SBR-)₂Mg-(R'-SBR)-Li. Le diamidure magnésien est généré par réaction d'un dialkylmagnésien avec deux équivalents d'amine secondaire. Le complexe est formé par la réaction d'addition du diamidure magnésien et d'un alkyllithien ou d'un amidure de lithium.

L'initiation par des composés de type R-N-R'-Li avec R de type alkylène (valence de l'azote) cyclique ou R₁R₂N-R'-Li avec R₁ et R₂ de type alkyle, aryle est décrite dans EP 0 316 255, EP 0 551 628, EP 0 553 467, WO 96/18657, EP 0 693 500, EP 0 693 505, EP 0 725 085, EP 0 736 550, EP 0 736 551, EP 0 850 941, EP 0 850 942, EP 0 850 958, EP 0 894 800, US 6,184,338, GB 2368845. Ces documents décrivent chacun des groupements R'de différentes natures. Selon les auteurs de ces documents, les amorceurs sont solubles dans les solvants aliphatiques hydrocarbonés.

L'initiation par une espèce formée par la réaction d'addition d'un alkyllithien sur la double liaison d'un composé possédant une fonction amine tertiaire est décrite dans EP 1 036 803, EP 1 334 985. Ce procédé requiert l'utilisation de composés de type diphényl éthylène mono ou di fonctionnels amine. Le produit de réaction de cette espèce avec un alkyllithium génère un alkyl tertiaire mono ou di fonctionnel amine qui permet d'initier la polymérisation du styrène et du butadiène.

Le but de l'invention est de préparer des élastomères linéaires vivants, modifiés en bout de chaîne par une fonction amine, qui sont susceptibles d'être modifiés sur l'autre extrémité de chaîne par un agent de fonctionnalisation, de couplage ou d'étoilage.

Ce but est atteint en ce que les inventeurs ont découvert un nouveau système d'amorçage qui permet à la fois la synthèse d'élastomères vivants fonctionnalisés par un groupement amine en extrémité de chaîne et qui présente des avantages en terme d'utilisation industrielle car les amorceurs sont solubles dans les solvants de polymérisation. En outre, les inventeurs ont mis en évidence que lorsqu'on modifie les élastomères vivants fonctionnalisés obtenus avec ce nouveau système d'amorçage, notamment par couplage à l'étain, il est possible de réaliser des compositions de caoutchouc renforcées présentant une hystérèse nettement réduite. Cette amélioration des propriétés hystérétiques est particulièrement propice à une utilisation de telles compositions pour la fabrication de pneumatiques.

Ainsi un premier objet de l'invention est un nouveau système d'amorçage pour la préparation d'élastomères diéniques vivants fonctionnalisés par un groupement amine en extrémité de chaîne, caractérisé en ce qu'il comprend un composé organolithien et un amidure d'étain tétravalent.

Un autre objet de l'invention est un procédé de préparation d'un élastomère diénique vivant fonctionnalisé par un groupement amine en extrémité de chaîne, caractérisé en ce qu'il comprend une étape de polymérisation d'au moins un monomère diène conjugué par réaction avec un système d'amorçage comprenant un composé organolithien et un amidure d'étain.

L'invention a également pour objet un procédé de préparation d'un élastomère diénique modifié comprenant en extrémité(s) de chaîne(s) une fonction amine, ledit procédé comprenant une première étape de polymérisation d'au moins un monomère diène conjugué par réaction avec un système d'amorçage comprenant un composé organolithien et un amidure d'étain, suivie d'une étape de modification de l'élastomère vivant obtenu dans l'étape précédente au moyen d'un agent de modification.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention a donc pour objet un nouveau système d'amorçage pour la préparation d'élastomères diéniques vivants fonctionnalisés par un groupement amine en extrémité de chaîne, caractérisé en ce qu'il comprend un composé organolithien et un amidure d'étain tétravalent qui ne comporte pas de liaison étain - lithium, notée Sn-Li.

Par composé organolithien, on entend selon l'invention un composé hydrocarboné comportant une liaison carbone-lithium représenté par la formule RLi, dans laquelle R représente un radical alkyle, aryle, cycloalkyle contenant de 1 à 20 atomes de carbones.

Des composés préférentiels sont les organolithiens aliphatiques. Parmi ceux-ci des composés représentatifs sont l'éthyllithium, le n-butyllithium (n-BuLi), l'isobutyllithium.

Par amidure d'étain, on entend selon l'invention un composé répondant à la formule Sn(NR₁R₂)ₐ(NR₃)_{b}(R₄)_{c}, dans laquelle R₁ et R₂ désignent un radical alkyle, cycloalkyle, aryle contenant de 1 à 20 atomes de carbones, R₃ un radical alkyle cyclique, ramifié ou non, contenant de 3 à 16 atomes de carbones, R₄ un radical alkyle, cycloalkyle, aryle contenant de 1 à 20 atomes de carbones, et a, b et c sont des entiers compris entre 0 et 4 sous réserve que a+b+c=4 et a+b ≥ 1.

Plus préférentiellement encore, l'amidure d'étain est choisi parmi l'hexaméthyleneimine tributylétain, pyrolidine tributylétain et 2-méthylpyrolidine tributylétain.

Le système d'amorçage selon l'invention comprend le composé organolithien et l'amidure d'étain dans des proportions telles que le rapport molaire du composé organolithien à l'amidure d'étain varie de 1/1 à 8/1. On préférera introduire autant de moles de composé organolithien que de moles de groupes aminés présents dans l'amidure d'étain, le rapport molaire du composé organolithien aux groupements aminés de l'amidure d'étain est préférentiellement de 1/1. Ces valeurs de rapports molaires sont données avec une approximation due à l'incertitude sur la mesure d'environ +/- 0,1.

Un autre objet de l'invention est un procédé de préparation d'un élastomère diénique vivant fonctionnalisé par un groupement amine en extrémité de chaîne, caractérisé en ce qu'il comprend une étape de polymérisation d'au moins un monomère diène conjugué par réaction avec un système d'amorçage comprenant un composé organolithien et un amidure d'étain.

Par élastomère diénique, on entend selon l'invention tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de monomères diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc.

A titre préférentiel, l'élastomère diénique est choisi parmi les polybutadiènes, les copolymères butadiène-styrène, les copolymères butadiène-styrène-isoprène et le polyisoprène. Avantageusement, l'élastomère diénique est un copolymère butadiène-styrène.

A ce titre conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 80°C et plus particulièrement entre - 10°C et - 70°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 85%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre 0°C et - 50°C, de préférence entre - 25°C et - 50°C. Dans le cas des copolymères de butadiène-styrène-isoprène conviennent notamment ceux ayant une teneur en styrène comprise entre 5% et 50% en poids, une teneur en isoprène comprise entre 15% et 60% en poids, et une teneur en butadiène comprise entre 5% et 50% en poids, et plus généralement tout copolymère butadiène-styrène-isoprène ayant une Tg comprise entre - 20°C et - 70°C.

Selon une variante du procédé selon l'invention, les composants du système d'amorçage sont ajoutés dans le milieu de polymérisation, constitué du ou des monomères et du solvant, séparément, de manière simultanée ou séquentielle. Dans ce dernier cas, on préfère introduire l'amidure d'étain dans le milieu réactionnel avant l'introduction du composé organolithien.

La polymérisation est effectuée en présence d'un solvant inerte, qui peut être un hydrocarbure aliphatique ou alicyclique comme le pentane, l'hexane, l'iso-octane, le cyclohexane, le méthylcyclohexane ou un hydrocarbure aromatique comme le benzène, le toluène ou le xylène. Le rapport massique du solvant au monomère(s) avant la réaction de polymérisation est de préférence compris entre 1 et 15, encore plus préférentiellement entre 4 et 7.

Le procédé de polymérisation peut être mis en oeuvre de manière continue ou discontinue.

La solution à polymériser peut également contenir un agent polaire de type éther, tel que le tétrahydrofuranne, ou de type aminé tel que la tétraméthyl-éthylène-diamine. Plusieurs types d'agents polaires peuvent être utilisés parmi lesquels des agents polaires non chélatants de type THF et des agents polaires chélatants possédant sur au moins deux atomes au moins un doublet non liant, comme par exemple de type tétrahydrofurfuryl éthyle éther ou tétraméthyl éthylènediamine.

On peut également ajouter des agents randomisants, tels que les alcoolates de sodium.

La polymérisation est généralement effectuée entre 15 et 150 °C, de préférence entre 30 et 100 °C.

A l'issue de cette étape de polymérisation, on obtient un élastomère diénique vivant fonctionnalisé par un groupement amine en extrémité de chaîne.

La polymérisation peut être stoppée en fin de réaction de manière à obtenir un élastomère diénique fonctionnalisé par un groupement amine en extrémité de chaîne. Le stoppage s'effectue de manière connue en soi, par exemple par du méthanol ou de l'eau.

Ou encore, la polymérisation peut être stoppée par un agent de modification, de manière connue en soi, afin d'obtenir un élastomère diénique modifié comportant un groupement amine en extrémité de chaîne. Un tel procédé fait également l'objet de l'invention.

Ainsi, un objet de l'invention est constitué par un procédé de préparation d'un élastomère diénique modifié comprenant à une au moins de ses extrémités une fonction amine, ledit procédé comprenant une première étape de polymérisation d'au moins un monomère diène conjugué par réaction avec un système d'amorçage comprenant un composé organolithien et un amidure d'étain, suivie d'une étape de modification de l'élastomère vivant obtenu dans l'étape précédente au moyen d'un agent de modification.

Par élastomère diénique modifié, on entend un élastomère fonctionnalisé en bout de chaîne, couplé ou étoilé par un groupement autre qu'amine. Ce groupement est issu de l'agent de modification.

Ainsi, selon l'invention, un élastomère fonctionnalisé en bout de chaîne est un élastomère linéaire qui comporte à une extrémité de chaîne une fonction amine et à l'autre extrémité de chaîne une autre fonction.

Un élastomère couplé, selon l'invention, est un élastomère linéaire composé de deux chaînes élastomériques liées entre elles par une fonction autre qu'amine, ledit élastomère comporte à chacune de ses deux extrémités une fonction amine.

Un élastomère étoilé, selon l'invention, est composé de plusieurs (au moins trois) branches élastomères liées entre elles par une fonction autre qu'amine, ledit élastomère comportant à chacune de ses branches une fonction amine.

Les agents de modification permettant de modifier l'élastomère vivant obtenu dans l'étape de polymérisation précédente sont connus.

Il s'agit selon une variante de l'invention, d'agents de fonctionnalisation de couplage ou d'étoilage de type halogénure d'étain, de silicium. De manière préférentielle, on choisit les agents de couplage à base d'étain de type R₂SnX₂, avec R un radical alkyle en C₁-C₁₂ et X un atome d'halogène, préférentiellement le chlore, par exemple Bu₂SnCl₂ ou un mélange Bu₂SnCl₂ et SnCl₄. Ou encore, de manière également préférentielle, on choisit les agents de couplage à base de silicium tels que décrits dans la demande au nom des Demanderesses WO 08/141702 de type MeSiX₃ (éventuellement en sur stoechiométrie afin de réaliser la synthèse de SBR possédant une fonction silanol en milieu de chaîne), ou encore tels que décrits dans les demandes au nom des Demanderesses FR 2 918 064 et FR 2 918 065 de type SiX₂-polyéther-SiX₂, X étant un atome d'halogène, préférentiellement le chlore.

Selon une autre variante de l'invention, les agents de fonctionnalisation, de couplage ou d'étoilage sont susceptibles d'introduire un groupement comportant une fonction polaire. Cette fonction polaire peut être choisie par exemple parmi les fonctions de type silanol, alkoxysilane, alkoxysilane portant un groupement amine, époxyde, éther, ester, hydroxyl, acide carboxylique ... Cette fonction améliore notamment l'interaction entre la charge renforçante inorganique d'une composition de caoutchouc et l'élastomère. De tels élastomères modifiés sont connus en soi et décrits dans l'art antérieur.

Plus particulièrement, parmi les élastomères diéniques modifiés selon l'invention on peut citer:
- les élastomères portant une fonction silanol, la fonction silanol étant située soit en bout de chaîne, soit en milieu de chaîne. Lorsqu'elle est située en bout de chaîne, la fonction silanol peut être portée par un bloc polysiloxane. Des élastomères fonctionnalisés de ce type sont par exemple décrits dans les demandes de brevet EP 0 778 311 A1, EP 0 786 493 A1, WO 08/141702, dont les descriptions sont introduites ici par référence.
- les élastomères modifiés un ou plusieurs groupements acide carboxylique tels que décrits par exemple dans la demande WO 01/92402.
- les élastomères fonctionnalisés en bout de chaîne, couplés ou étoilés issus de la fonctionnalisation des élastomères diénique par un agent répondant à la formule générale :

   (Y)m-R¹-Si(OR²)₃₋ₙ-R³n

   dans laquelle :
   Y représente les restes 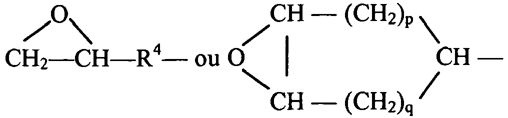
      - R1 représente un reste alcoyle, cycloalcoyle ou aryle ayant de 1 à 10 atomes de carbone,
      - R2 représente un reste alcoyle, aryle, cycloalcoyle, alkaryle, aralkyle, ayant de 1 à 12 atomes de carbone,
      - R3 représente un reste alcoyle, aryle, alkaryle ayant de 1 à 12 atomes de carbone,
      - R4 représente un reste hydrocarboné ayant de 1 à 6 atomes de carbone et pouvant comprendre un ou plusieurs atomes d'oxygène dans la chaîne hydrocarbonée,
      - n est un nombre entier choisi parmi les valeurs 0, 1,
      - m est un nombre entier choisi parmi les valeurs 1 ou 2,
      - p et q sont des nombres entiers choisis parmi les valeurs 0, 1, 2, 3 ou 4 étant entendu que la somme p + q doit représenter un nombre entier compris entre 2 et 5 inclusivement.

   Des élastomères fonctionnalisés de ce type sont par exemple décrits dans les demandes de brevet EP 0 692 492 A1 et EP 0 692 493 A1, dont les descriptions sont introduites ici par référence.
- les élastomères fonctionnalisés en bout de chaîne, couplés ou étoilés issus de la modification des élastomères diéniques par un agent de type alkoxysilane portant un groupement amine, cyclique ou non, tertiaire, secondaire ou primaire. Des élastomères fonctionnalisés de ce type sont par exemple décrits dans les demandes de brevet, US 2005/0203251, JP 2001158834, JP 2005232367, EP 1 457 501 A1, PCT/EP09/055061 dont les descriptions sont introduites ici par référence. Avantageusement, l'élastomère diénique ainsi modifié est couplé par un groupement alcoxysilane lié à l'élastomère diénique par l'atome de silicium et portant un grouperment amine.

Par élastomère diénique modifié, on entend également selon l'invention un élastomère à blocs comprenant au moins un bloc polaire, ce dernier étant plus particulièrement un bloc polyéther. Ces élastomères à blocs comportent au moins ledit bloc polaire en bout de chaîne polymérique ou en milieu de chaîne, ou encore ces élastomères à blocs peuvent se présenter sous forme étoilée avec au moins un bloc polaire central auquel sont liées plusieurs, c'est-à-dire plus de deux, chaînes polymériques. Ces élastomères à blocs sont généralement obtenus par réaction d'un élastomère diénique vivant sur un agent de modification ayant un bloc polyéther fonctionnel. De tels élastomères sont décrits par exemple dans les demandes de brevet EP 1 127 909 A1, WO 09/000750 et WO 09/000752, dont les descriptions sont introduites ici par référence.

La quantité d'agent de modification est telle que le rapport molaire d'agent de modification au taux de polymère vivant est compris entre 0,25 et 1,0. On choisira préférentiellement un rapport compris entre 0,3 et 0,7.

La réaction de modification de l'élastomère diénique vivant peut se dérouler à une température comprise entre -20°C et 100 °C, par addition de l'agent de modification sur les attaches polymériques vivantes ou inversement. Cette réaction peut bien sûr être réalisée avec un ou plusieurs agents de modification.

Le mélangeage de l'élastomère vivant avec l'agent de modification peut être réalisé par tout moyen approprié notamment à l'aide de tout mélangeur disposant d'une agitation de type statique et/ou tout mélangeur dynamique de type parfaitement agité connu par l'homme de l'art. Ce dernier détermine le temps de réaction entre l'élastomère diénique vivant et l'agent de modification. A titre d'exemple, ce temps peut être compris entre 10 secondes et 2 heures.

Bien entendu, on peut ajouter un ou plusieurs agents antioxydants au mélange réactionnel avant récupération du polymère fonctionnalisé. Le polymère modifié est séparé du milieu réactionnel par des techniques classiques, c'est-à-dire soit par coagulation, soit par entraînement à la vapeur d'eau du solvant, soit par évaporation par quelque moyen que ce soit comme par exemple évaporation sous vide puis séchage si c'est nécessaire.

Le procédé selon l'invention permet d'obtenir des élastomères diéniques modifiés ayant une viscosité Mooney qui peut s'étendre sur une large échelle comprise entre 10 et 150 et de préférence comprise entre 30 et 100.

Les élastomères diéniques modifiés obtenus selon le procédé de l'invention confèrent aux compositions de caoutchouc renforcées vulcanisées qui les contiennent des propriétés dynamiques et mécaniques améliorées. Ce qui rend ces élastomères diéniques modifiés tout particulièrement adaptés à la réalisation de pneumatique, plus particulièrement de bande de roulement pour pneumatique notamment du fait du faible niveau d'hystérèse atteint.

Les élastomères diéniques modifiés obtenus selon le procédé de l'invention confèrent en outre aux compositions non vulcanisées contenant la charge renforçante des propriétés de mise en oeuvre satisfaisantes, notamment une extrudabilité ou une aptitude au tirage à l'aide d'une boudineuse compatible avec les outils industriels.

La charge renforçante pour constituer ces compositions de caoutchouc peut être de tout type approprié pour une application pneumatique, par exemple de la silice, du noir de carbone ou un coupage noir/silice.

Les caractéristiques précitées de la présente invention, ainsi que d'autres, seront mieux comprises à la lecture de la description suivante de plusieurs exemples de réalisation de l'invention, donnés à titre illustratif et non limitatif.

### Synthèse de l'amidure d'étain

### Exemple 1 : Synthèse de l'hexaméthyleneimine tributylétain.

Dans une bouteille Steinie de 250 ml préalablement lavée et séchée, 130ml de méthylcyclohexane, 60mmol d'hexaméthyleneimine puis 61,2 mmol de n-butyllithium sont introduits. Le milieu réactionnel est ensuite agité pendant 10min. 58,8 mmol de chlorure de tributhyl étain sont ensuite additionnées gouttes à gouttes. Le mélange obtenu est agité une heure à température ambiante. L'amidure d'étain ainsi obtenu est soluble dans la solution de méthylcyclohexane contrairement au chlorure de lithium qui précipite. Il est ensuite utilisé brut en solution dans le méthylcyclohexane.

### Exemple 2 : Synthèse de la pyrolidine tributylétain.

Le mode opératoire est le même qu'à l'exemple 1, l'hexamethyleneimine étant remplacé par la pyrolidine.

### Exemple 3 : Synthèse de la 2-méthylpyrolidine tributylétain.

Le mode opératoire est le même qu'à l'exemple 1, l'hexamethyleneimine étant remplacé par la 2-méthylpyrolidine. méthylpyrrolidine

### Préparation d'un l'élastomère diénique modifié

### Exemple 4 : Synthèse du SBR A non-conforme à l'invention.

Dans un réacteur de 10L sous azote, on introduit 6,6L de méthylcyclohexane, 532g de butadiène, 197g de styrène et 0,58 g de tétrahydrofurfuryl éthyl éther. Après neutralisation des impuretés au n-butyllithium, on injecte 3,05mmol de butyllithium. La polymérisation s'effectue durant 50 minutes à 50°C. Une conversion de 95% des monomères est mesurée par pesée d'un extrait séché à 150° C, sous pression réduite (200 mmHg). On introduit ensuite dans le réacteur un excès de méthanol.

On soumet le polymère couplé obtenu à un traitement anti-oxydant par addition de 0,40 parties pour cent parties d'élastomères (pce) de 4,4'-méthylène-bis-2,6-tert-butylphénol et de 0,20 parties pour cent parties d'élastomères (pce) de N-(1,3-diméthylbutyl)-N'-phényl-p-phénylènediamine. On récupère ce polymère après stripping puis séchage sur un outil à cylindre.

La viscosité inhérente mesurée dans le toluène à 25°C à une concentration de 0,1 g/dl du polymère obtenu est de 1,85 dl/g. La viscosité ML du polymère est de 68.

La microstructure de ce polymère est déterminée RMN 13C:
Le taux massique de BR 1,4-trans est de 20,5 %, celui de BR 1,4-cis est de 19,2 % et celui de BR 1,2 est de 60,3 %. Le taux massique de styrène est de 25,4 %.
La masse moléculaire Mn de ce polymère, déterminée par la technique SEC, est de 166 000 g.mol-1, l'Ip est de 1,15.

### Exemple 5 : Synthèse du SBR B initié par la 2-méthylpyrolidine tributylétain selon l'invention.

Dans un réacteur de 10L sous azote, on introduit 6,6L de méthylcyclohexane, 532g de butadiène, 197g de styrène et 0,55 g de tétrahydrofurfuryl éthyl éther. Après neutralisation des impuretés au n-butyllithium, on injecte 6,48mmol de 2-méthylpyrolidine tributylétain formée selon l'exemple 3 puis 6,51mol de n-butyllithium. La polymérisation s'effectue durant 45 minutes à 45°C. Une conversion de 96% des monomères est mesurée par pesée d'un extrait séché à 150° C, sous pression réduite (200 mmHg).

Un échantillon est prélevé avant la réaction de couplage dans une bouteille sténie de 250ml contenant un excès de méthanol. La viscosité inhérente de l'échantillon, laquelle est mesurée à 25°C dans le toluène à une concentration de 0,1g/dl, est de 1,18 dl/g. La masse moléculaire Mn déterminée par la technique SEC est de 104 000 g/mol, l'Ip est de 1,15.

On introduit ensuite dans le réacteur 2,94 mmol de chlorure de dibutylétain. Après 30 min. de réaction à 60° C, un excès de méthanol est injecté dans le réacteur.

On soumet le polymère couplé obtenu à un traitement anti-oxydant par addition de 0,80 parties pour cent parties d'élastomères (pce) de 4,4'-méthylène-bis-2,6-tert-butylphénol et de 0,20 parties pour cent parties d'élastomères (pce) de N-(1,3-diméthylbutyl)-N'-phényl-p-phénylènediamine. On récupère ce polymère après stripping puis séchage sur un outil à cylindre.

La viscosité inhérente mesurée dans le toluène à 25°C à une concentration de 0,1 g/dl du polymère obtenu est de 1,84 dl/g. Le saut de viscosité, rapport de la viscosité du polymère couplé sur la viscosité de l'échantillon prélevé avant couplage, est de 1,56. La viscosité ML du polymère est de 68.

La microstructure de ce polymère est déterminée RMN 13C:
Le taux massique de BR 1,4-trans est de 20,3 %, celui de BR 1,4-cis est de 19,0 % et celui de BR 1,2 est de 60,7 %. Le taux massique de styrène est de 25,0 %.
La masse moléculaire Mn de ce polymère, déterminée par la technique SEC, est de 174 000 g.mol-1, l'Ip est de 1,24.
Le taux de groupements amine tertiaire lié au polymère via un motif butadiènyl 1,4 déterminé par RMN 1H est de 55%.

### Exemple 6 : Synthèse du SBR C initié par la pyrolidine tributylétain selon l'invention.

Dans un réacteur de 10L sous azote, on introduit 6,6L de méthylcyclohexane, 532g de butadiène, 197g de styrène et 0,46 g de tétrahydrofurfuryl éthyl éther. Après neutralisation des impuretés au n-butyllithium, on injecte 5,84mmol de pyrolidine tributylétain formé selon l'exemple 2 puis 5,89mmol de n-butyllithium. La polymérisation s'effectue durant 45 minutes à 45°C. Une conversion de 96% des monomères est mesurée par pesée d'un extrait séché à 150° C, sous pression réduite (200 mmHg).

Un échantillon est prélevé avant la réaction de couplage dans une bouteille sténie de 250ml contenant un excès de méthanol. La viscosité inhérente de l'échantillon, laquelle est mesurée à 25°C dans le toluène à une concentration de 0,1g/dl, est de 1,18 dl/g. La masse moléculaire Mn déterminée par la technique SEC est de 101 000 g/mol, l'Ip est de 1,20.

On introduit ensuite dans le réacteur 2,78 mmol de chlorure de dibutylétain. Après 30 min. de réaction à 60° C, un excès de méthanol est injecté dans le réacteur.

On soumet le polymère couplé obtenu à un traitement anti-oxydant par addition de 0,80 parties pour cent parties d'élastomères (pce) de 4,4'-méthylène-bis-2,6-tert-butylphénol et de 0,20 parties pour cent parties d'élastomères (pce) de N-(1,3-diméthylbutyl)-N'-phényl-p-phénylènediamine. On récupère ce polymère après stripping puis séchage sur un outil à cylindre.

La viscosité inhérente mesurée dans le toluène à 25°C à une concentration de 0,1 g/dl du polymère obtenu est de 1,77 dl/g. Le saut de viscosité, rapport de la viscosité du polymère couplé sur la viscosité de l'échantillon prélevé avant couplage, est de 1,50. La viscosité ML du polymère est de 69.

La microstructure de ce polymère est déterminée RMN 13C:
Le taux massique de BR 1,4-trans est de 21,6 %, celui de BR 1,4-cis est de 19,5 % et celui de BR 1,2 est de 58,9 %. Le taux massique de styrène est de 24,8 %.
La masse moléculaire Mn de ce polymère, déterminée par la technique SEC, est de 164 000 g.mol-1, l'Ip est de 1,25.
Le taux de groupements amine tertiaire lié au polymère via un motif butadiènyl 1,4 déterminé par RMN 1H est de 55%.

### Exemple 7 : Synthèse du SBR D initié par l'hexaméthyleneimine tributylétain selon l'invention.

Dans un réacteur de 10L sous azote, on introduit 6,6L de méthylcyclohexane, 532g de butadiène, 197g de styrène et 0,52 g de tétrahydrofurfuryl éthyl éther. Après neutralisation des impuretés au n-butyllithium, on injecte 6,71mmol d'hexaméthyleneimine tributylétain formé selon l'exemple 1 puis 6,72mmol de n-butyllithium. La polymérisation s'effectue durant 45 minutes à 45°C. Une conversion de 95% des monomères est mesurée par pesée d'un extrait séché à 150° C, sous pression réduite (200 mmHg).

Un échantillon est prélevé avant la réaction de couplage dans une bouteille sténie de 250ml contenant un excès de méthanol. La viscosité inhérente de l'échantillon, laquelle est mesurée à 25°C dans le toluène à une concentration de 0,1g/dl, est de 1,12 dl/g. La masse moléculaire Mn déterminée par la technique SEC est de 99 000 g/mol, l'Ip est de 1,10.

On introduit ensuite dans le réacteur 3,22 mmol de chlorure de dibutylétain. Après 30 min. de réaction à 60° C, un excès de méthanol est injecté dans le réacteur.

On soumet le polymère couplé obtenu à un traitement anti-oxydant par addition de 0,80 parties pour cent parties d'élastomères (pce) de 4,4'-méthylène-bis-2,6-tert-butylphénol et de 0,20 parties pour cent parties d'élastomères (pce) de N-(1,3-diméthylbutyl)-N'-phényl-p-phénylènediamine. On récupère ce polymère après stripping puis séchage sur un outil à cylindre.

La viscosité inhérente mesurée dans le toluène à 25°C à une concentration de 0,1 g/dl du polymère obtenu est de 1,71 dl/g. Le saut de viscosité, rapport de la viscosité du polymère couplé sur la viscosité de l'échantillon prélevé avant couplage, est de 1,53. La viscosité ML du polymère est de 70.

La microstructure de ce polymère est déterminée RMN 13C:
Le taux massique de BR 1,4-trans est de 20,5 %, celui de BR 1,4-cis est de 19,5 % et celui de BR 1,2 est de 60,0 %. Le taux massique de styrène est de 25,2 %.
La masse moléculaire Mn de ce polymère, déterminée par la technique SEC, est de 164 000 g.mol-1, l'Ip est de 1,20.
Le taux de groupements amine tertiaire lié au polymère via un motif butadiènyl 1,4 déterminé par RMN 1H est de 55%.

### Exemples comparatifs de compositions de caoutchouc

### A) Mesures et tests utilisés

(a) la viscosité Mooney ML (grand plateau) ou MS (petit plateau) (1+4) à 100° C: mesurée selon la norme ASTM: D-1646, intitulée "Mooney " dans les tableaux,
(b) la dureté SHORE A: mesures effectuées selon la norme DIN 53505,
(c) les modules d'allongement à 300 % (MA 300), à 100 % (MA 100) et à 10 % (MA 10): mesures effectuées selon la norme ISO 37,
(d) l'indice de cassage Scott à 23°C : on détermine la contrainte à la rupture (FR) en MPa et l'allongement à la rupture (AR) en %. Toutes ces mesures de traction sont effectuées dans les conditions normales de température et d'hygrométrie selon la norme ISO 37.
(d) Les propriétés dynamiques ΔG* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10 Hz, dans les conditions normales de température (23°C) selon la norme ASTM D 1349-99. On effectue un balayage en amplitude de déformation crête-crête de 0,1 à 50% (cycle aller), puis de 50% à 0,1% (cycle retour). Les résultats exploités sont le module complexe de cisaillement dynamique (G*) et le facteur de perte tan δ. Pour le cycle retour, on indique la valeur maximale de tan δ observée (tan(δ)max), ainsi que l'écart de module complexe (ΔG*) entre les valeurs à 0,1 et 50% de déformation (effet Payne).

### B) Exemple

Dans cet exemple, les quatre élastomères SBR A, SBR B, SBRC et SBR D ont été utilisés pour la préparation de compositions de caoutchouc A, B, C et D, comprenant chacune du noir de carbone et de la silice à titre de charge renforçante.

Chacune de ces compositions A, B, C et D présente la formulation suivante (exprimée en pce : parties pour cent parties d'élastomère) :

| | |
|---|---|
| Elastomère | 100 |
| N234 | 35 |
| Silice (1) | 35 |
| Huile (2) | 24.5 |
| X50S (3) | 5.6 |
| Diphénylguanidine | 0.7 |
| Anti-oxydant (4) | 1.9 |
| Cire anti-ozone | 1.5 |
| Acide stéarique | 2 |
| ZnO | 2.5 |
| Sulfénamide (5) | 1.3 |
| Soufre | 1.3 |

| | |
|---|---|
| (1) = Silice "Zeosil 1165 MP " de la société Rhodia, (2) = Huile Tufflo 2000 (3) = de la Société Degussa, (4) = N-(1,3-diméthylbutyl)-N'-phényl-p-phénylènediamine, ("Santoflex 6-PPD" de la société Flexsys) (5) = CBS de la société Flexsys | |

Chacune des compositions suivantes est réalisée, dans un premier temps, par un travail thermo-mécanique, puis, dans un second temps de finition, par un travail mécanique.

On introduit successivement, dans un mélangeur interne de laboratoire de type "Banbury', dont la capacité est de 400 cm3, qui est rempli à 75% et dont la température initiale est d'environ 70°C, l'élastomère, la silice, l'huile, la diphénylguanidine, le X50S, l'antioxydant, l'acide stéarique et la cire puis, environ 40 secondes plus tard, le noir, puis, environ trois minutes plus tard ou à 150°C le monoxyde de zinc.

On conduit l'étape de travail thermo-mécanique pendant 5 à 6 minutes, jusqu'à une température maximale de tombée de 160°C environ.

Le premier temps précité de travail thermo-mécanique est ainsi réalisé, étant précisé que la vitesse moyenne des palettes lors de ce premier temps est de 70 tours/min.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

Les résultats sont consignés dans le tableau ci-après :

| Composition | A | B | C | D |
|---|---|---|---|---|
| Elastomère | SBR A | SBR B | SBR C | SBR D |
| ML 1+4 à 100°C (élastomère) | 67.5 | 67.5 | 69.7 | 69.7 |

| Propriétés à l'état non réticulé : | | | | |
|---|---|---|---|---|
| MS 1+4 à 100°C (" Mooney mélange ") | 46.1 | 47.3 | 45.2 | 48.0 |

| Propriétés à l'état réticulé : | | | | |
|---|---|---|---|---|
| Shore A | 69.1 | 64.5 | 64.3 | 64.9 |
| MA10 | 5.79 | 4.53 | 4.48 | 4.66 |
| MA100 | 2.25 | 2.25 | 2.18 | 2.28 |
| MA300 | 2.54 | 3.09 | 3.02 | 3.17 |
| MA300/MA100 | 1.13 | 1.37 | 1.38 | 1.39 |

| Indice de cassage Scott à 23°C | | | | |
|---|---|---|---|---|
| Fr (MPa) | 17.8 | 18.3 | 18.0 | 19.4 |
| Ar(%) | 461 | 385 | 387 | 395 |

| Propriétés dynamiques en fonction de la déformation | | | | |
|---|---|---|---|---|
| Delta G* (MPa) à 23°C | 6.95 | 2.32 | 2.11 | 2.48 |
| Tan (δ) max à 23°C | 0.394 | 0.296 | 0.279 | 0.302 |

On notera que les compositions B, C et D selon l'invention présentent une valeur de "Mooney mélange" équivalentes à celle de la composition A à base d'un élastomère non fonctionnel. Les élastomères B, C et D portant une fonction amine et couplés étain selon l'invention ont une mise en oeuvre équivalente à l'état non réticulé à l'élastomère non fonctionnel.

Concernant les propriétés à l'état réticulé, on notera que les rapports MA300/MA100 des compositions B, C et D selon l'invention sont supérieurs à celui de la composition A à base d'un élastomère non fonctionnel. Les élastomères B, C et D portant une fonction amine et couplés étain selon l'invention permettent d'améliorer le renforcement par rapport à l'élastomère non fonctionnel.

Concernant les propriétés dynamiques, on notera que les valeurs de Delta G* et de tan δ max des compositions B, C et D selon l'invention sont inférieures à celles de la composition A à base d'un élastomère non fonctionnel. Les élastomères B, C et D portant une fonction amine et couplés étain selon l'invention permettent d'améliorer les propriétés hystérétiques par rapport à l'élastomère A non fonctionnel.

En d'autres termes, les compositions B, C et D selon l'invention à base d'élastomères portant une fonction amine et couplés étain présentent des propriétés de caoutchouterie à l'état non réticulé et à l'état réticulé qui sont améliorées par rapport à celles de la composition A à base d'un élastomère non fonctionnel du fait d'une hystérèse nettement réduite à mise en oeuvre équivalente.

## Revendications

1. Système d'amorçage pour la préparation d'élastomères diéniques vivants fonctionnalisés par un groupement amine en extrémité de chaîne, **caractérisé en ce qu'**il comprend un composé organolithien et un amidure d'étain tétravalent ne possédant pas de liaison Sn-Li.

2. Système d'amorçage selon la revendication 1, **caractérisé en ce que** le rapport molaire du composé organolithien à l'amidure d'étain tétravalent varie de 1/1 à 8/1.

3. Système d'amorçage selon la revendication 1 ou 2, **caractérisé en ce que** le rapport molaire du composé organolithien aux groupements aminés de l'amidure d'étain tétravalent est de 1/1.

4. Système d'amorçage selon l'une quelconque des revendications 1 à 3 , **caractérisé en ce que** le composé organolithien est un composé hydrocarboné représenté par la formule RLi, dans laquelle R représente un radical alkyle, aryle, cycloalkyle contenant de 1 à 20 atomes de carbones.

5. Système d'amorçage selon l'une quelconque des revendications 1 à 4 , **caractérisé en ce que** l'amidure d'étain tétravalent est un composé répondant à la formule Sn(NRlR2)ₐ(NR3)_{b}(R4)_{c}, dans laquelle R1 et R2 désignent un radical alkyle, cycloalkyle, aryle contenant de 1 à 20 atomes de carbones, R3 un radical alkyle cyclique, ramifié ou non, contenant de 3 à 16 atomes de carbones, R4 un radical alkyle, cycloalkyle, aryle contenant de 1 à 20 atomes de carbones, et a, b et c sont des entiers compris entre 0 et 4 sous réserve que a+b+c=4 et a+b ≥ 1.

6. Procédé de préparation d'un élastomère diénique vivant fonctionnalisé par un groupement amine en extrémité de chaîne, **caractérisé en ce qu'**il comprend une étape de polymérisation d'au moins un monomère diène conjugué par réaction avec un système d'amorçage tel que défmi dans l'une quelconque des revendications 1 à 5

7. Procédé selon la revendication 6, **caractérisé en ce que** le monomère diène conjugué est copolymérisé avec un composé vinylaromatique.

8. Procédé selon la revendication 6 ou 7, **caractérisé en ce que** le milieu de polymérisation comprend un solvant organique inerte.

9. Procédé selon la revendication 8, **caractérisé en ce que** le rapport massique du solvant au monomère(s) avant la réaction de polymérisation varie de 4 à 7.

10. Procédé selon l'une quelconque des revendications 6 à 9, **caractérisé en ce que** les composants du système d'amorçage sont ajoutés dans le milieu de polymérisation séparément.

11. Procédé selon la revendication 10, **caractérisé en ce que** l'amidure d'étain tétravalent est ajouté dans le milieu polymérisation avant l'introduction du composé organolithien.

12. Procédé de préparation d'un élastomère diénique modifié comprenant à une au moins de ces extrémités une fonction amine, **caractérisé en ce qu'**il comprend :
(i) une étape de préparation d'un élastomère diénique vivant fonctionnalisé par un groupement amine en extrémité de chaîne selon le procédé défini dans l'une quelconque des revendications 6 à 11, et
(ii) une étape de modification de l'élastomère vivant obtenu dans l'étape précédente au moyen d'un agent de modification.

13. Procédé selon la revendication 12, **caractérisé en ce que** l'étape de modification se fait au moyen d'un agent de fonctionnalisation, de couplage ou d'étoilage choisi parmi les halogénures d'étain, de silicium et les agents susceptibles d'introduire un groupement comportant une fonction polaire, ou encore d'un agent de modification ayant un bloc polyéther fonctionnel.

14. Procédé selon la revendication 13, **caractérisé en ce que** l'agent de couplage est représenté par la formule R₂SnX₂, avec R désignant un radical alkyle en C₁-C₁₂ et X un atome d'halogène.

15. Procédé selon la revendication 14, **caractérisé en ce que** l'agent de couplage est le chlorure de dibutylétain.

## Claims

1. Initiating system for the preparation of living diene elastomers functionalized by an amine group at the chain end, **characterized in that** it comprises an organolithium compound and a tetravalent tin amide not having an Sn-Li bond.

2. Initiating system according to Claim 1, **characterized in that** the molar ratio of the organolithium compound to the tetravalent tin amide varies from 1/1 to 8/1.

3. Initiating system according to Claim 1 or 2, **characterized in that** the molar ratio of the organolithium compound to the amine groups of the tetravalent tin amide is 1/1.

4. Initiating system according to any one of Claims 1 to 3, **characterized in that** the organolithium compound is a hydrocarbon compound represented by the formula RLi, in which R represents an alkyl, aryl or cycloalkyl radical comprising from 1 to 20 carbon atoms.

5. Initiating system according to any one of Claims 1 to 4, **characterized in that** the tetravalent tin amide is a compound corresponding to the formula Sn(NR₁R₂)ₐ(NR₃)_{b}(R₄)_{c}, in which R₁ and R₂ denote an alkyl, cycloalkyl or aryl radical comprising from 1 to 20 carbon atoms, R₃ denotes a branched or unbranched cyclic alkyl radical comprising from 3 to 16 carbon atoms, R₄ denotes an alkyl, cycloalkyl or aryl radical comprising from 1 to 20 carbon atoms, and a, b and c are integers between 0 and 4 with the proviso that a+b+c=4 and a+b ≥ 1.

6. Process for the preparation of a living diene elastomer functionalized by an amine group at the chain end, **characterized in that** it comprises a stage of polymerization of at least one conjugated diene monomer by reaction with an initiating system as defined in any one of Claims 1 to 5.

7. Process according to Claim 6, **characterized in that** the conjugated diene monomer is copolymerized with a vinylaromatic compound.

8. Process according to Claim 6 or 7, **characterized in that** the polymerization medium comprises an inert organic solvent.

9. Process according to Claim 8, **characterized in that** the ratio by weight of the solvent to the monomer(s) before the polymerization reaction varies from 4 to 7.

10. Process according to any one of Claims 6 to 9, **characterized in that** the components of the initiating system are added to the polymerization medium separately.

11. Process according to Claim 10, **characterized in that** the tetravalent tin amide is added to the polymerization medium before the introduction of the organolithium compound.

12. Process for the preparation of a modified diene elastomer comprising an amine functional group at at least one of its ends, **characterized in that** it comprises:
(i) a stage of preparation of a living diene elastomer functionalized by an amine group at the chain end according to the process defined in any one of Claims 6 to 11, and
(ii) a stage of modification by means of a modifying agent of the living elastomer obtained in the preceding stage.

13. Process according to Claim 12, **characterized in that** the stage of modification is carried out by means of a functionalization, coupling or star-branching agent chosen from tin halides, silicon halides and agents capable of introducing a group comprising a polar functional group, or of a modifying agent having a functional polyether block.

14. Process according to Claim 13, **characterized in that** the coupling agent is represented by the formula R₂SnX₂, with R denoting a C₁-C₁₂ alkyl radical and X denoting a halogen atom.

15. Process according to Claim 14, **characterized in that** the coupling agent is dibutyltin chloride.

## Patentansprüche

1. Initiatorsystem zur Herstellung von lebenden Dienelastomeren, die am Kettenende mit einer Amingruppe funktionalisiert sind, **dadurch gekennzeichnet, dass** es eine Organolithiumverbindung und ein Amid des vierwertigen Zinns ohne Sn-Li-Bindung umfasst.

2. Initiatorsystem nach Anspruch 1, **dadurch gekennzeichnet, dass** das Molverhältnis von Organolithiumverbindung zu Amid des vierwertigen Zinns von 1/1 bis 8/1 variiert.

3. Initiatorsystem nach Anspruch 1 oder 2, **dadurch gekennzeichnet, dass** das Molverhältnis von Organolithiumverbindung zu Amingruppen des Amids des vierwertigen Zinns 1/1 beträgt.

4. Initiatorsystem nach einem der Ansprüche 1 bis 3, **dadurch gekennzeichnet, dass** es sich bei der Organolithiumverbindung um eine Kohlenwasserstoffverbindung der Formel RLi handelt, worin R für einen Alkyl-, Aryl- oder Cycloalkylrest mit 1 bis 20 Kohlenstoffatomen steht.

5. Initiatorsystem nach einem der Ansprüche 1 bis 4, **dadurch gekennzeichnet, dass** es sich bei dem Amid des vierwertigen Zinns um eine Verbindung der Formel Sn(NR₁R₂)ₐ(NR₃)_{b}(R₄)_{c} handelt, worin R₁ und R₂ für einen Alkyl-, Cycloalkyl- oder Arylrest mit 1 bis 20 Kohlenstoffatomen stehen, R₃ für einen gegebenenfalls verzweigten cyclischen Alkylrest mit 3 bis 16 Kohlenstoffatomen steht, R₄ für einen Alkyl-, Cycloalkyl- oder Arylrest mit 1 bis 20 Kohlenstoffatomen steht und a, b und c für ganze Zahlen zwischen 0 und 4 stehen, mit der Maßgabe, dass a+b+c=4 und a+b>1.

6. Verfahren zur Herstellung eines lebenden Dienelastomers, das am Kettenende mit einer Amingruppe funktionalisiert ist, **dadurch gekennzeichnet, dass** es einen Schritt der Polymerisation von mindestens einem konjugierten Dienmonomer durch Reaktion mit einem Initiatorsystem gemäß einem der Ansprüche 1 bis 5 umfasst.

7. Verfahren nach Anspruch 6, **dadurch gekennzeichnet, dass** man das konjugierte Dienmonomer mit einer vinylaromatischen Verbindung copolymerisiert.

8. Verfahren nach Anspruch 6 oder 7, **dadurch gekennzeichnet, dass** das Polymerisationsmedium ein inertes organisches Lösungsmittel umfasst.

9. Verfahren nach Anspruch 8, **dadurch gekennzeichnet, dass** das Gewichtsverhältnis von Lösungsmittel zu Monomer(en) vor der Polymerisationsreaktion von 4 bis 7 variiert.

10. Verfahren nach einem der Ansprüche 6 bis 9, **dadurch gekennzeichnet, dass** man die Komponenten des Initiatorsystems separat in das Polymerisationsmedium gibt.

11. Verfahren nach Anspruch 10, **dadurch gekennzeichnet, dass** man das Amid des vierwertigen Zinns vor dem Eintragen der Organolithiumverbindung in das Polymerisationsmedium gibt.

12. Verfahren zur Herstellung eines modifizierten Dienelastomers mit einer Aminfunktion an mindestens einem seiner Enden, **dadurch gekennzeichnet, dass** es
(i) einen Schritt der Herstellung eines lebenden Dienelastomers, das am Kettenende mit einer Amingruppe funktionalisiert ist, nach einem Verfahren gemäß einem der Ansprüche 6 bis 11 und
(ii) einen Schritt der Modifizierung des im vorhergehenden Schritt erhaltenen lebenden Elastomers mit einem Modifizierungsmittel
umfasst.

13. Verfahren nach Anspruch 12, **dadurch gekennzeichnet, dass** der Modifizierungsschritt mit einem unter Zinnhalogeniden, Siliciumhalogeniden und Mitteln, die zur Einführung einer Gruppe mit einer polaren Funktion befähigt sind, ausgewählten Funktionalisierungs-, Kupplungs- oder Sternverzweigungsmittel oder auch einem Modifizierungsmittel mit einem funktionellen Polyetherblock durchgeführt wird.

14. Verfahren nach Anspruch 13, **dadurch gekennzeichnet, dass** das Kupplungsmittel durch die Formel R₂SnX₂ wiedergegeben wird, wobei R für einen C₁-C₁₂-Alkylrest steht und X für ein Halogenatom steht.

15. Verfahren nach Anspruch 14, **dadurch gekennzeichnet, dass** es sich bei dem Kupplungsmittel um Dibutylzinnchlorid handelt.
